# EUROPÄISCHE PATENTANMELDUNG

(11) **EP 1 275 941 A1**
(43) Veröffentlichungstag der Anmeldung: **15.01.2003**
(21) Anmeldenummer: 01116550.3
(22) Anmeldetag: 09.07.2001
(51) Int. Cl.: G01F 1/60

(54) **Verfahren zum Betrieb eines magnetisch-induktiven Durchflussmessers**

(71) Anmelder: Endress + Hauser Flowtec AG, CH-4153 Reinach BL (CH)
(72) Erfinder: Budmiger,Thomas, 4107 Ettingen (CH)

(57) **Zusammenfassung**

Der Durchflußmesser umfasst einen Durchflußaufnehmer (1) mit einem Meßrohr (11), zwei Elektroden (12, 13) und zwei Spulen (14, 15), in denen jeweils ein Spulenstrom (I1 bzw, I2) fließt, sowie eine Betriebs- und Auswerte-Elektronik. Das Verfahren dient der Erzeugung eines Fehlersignals, wenn in der zu messenden Flüssigkeit die gleichmäßige Turbulenz gestört wird. Während der Periodendauer (V1) sind die Spulenströme (I1, I2) einander gleich, haben den Konstantwert (Ik) und fließen gleichsinnig. Während der Periodendauer (V2) hat der Spulenstrom (I1) den Konstantwert (Ik) und fließt in der Gegenrichtung (G) und der Spulenstrom (I2) ist um einen konstanten Betrag kleiner und fließt in der Stromrichtung (R). Während der Periodendauer (V3) haben die Spulenströme (I1, I2) den Konstantwert (Ik) und fließen in der Gegenrichtung (G). Während der Periodendauer (V4) hat der Spulenstrom (I1) den Konstantwert (Ik) und fließt in der Stromrichtung (R) und der Spulenstrom (I2) ist um den konstanten Betrag kleiner und fließt in der Gegenrichtung (G). Während jeder Periodendauer wird eine Spannung (U1, U2, U3, U4) von den Elektroden abgeleitet und daraus zwei Spannungsdifferenzen (U31 = U3 - U1; U42 = U4 - U2) sowie der Quotient (Q = U24/U31) gebildet. Dieser wird während einer Kalibration bei gleichmäßig turbulenter Strömung ermittelt und gespeichert. Während des Betriebs werden laufend Werte des Quotienten gebildet und mit dem gespeicherten Quotienten verglichen; bei Abweichungen wird ein Alarm ausgelöst und/oder das Volumen-Durchflußsignal, das von der Spannungsdifferenz (U31) repräsentiert wird, korrigiert.

## Beschreibung

Die Erfindung betrifft magnetisch-induktive Durchflußmesser mit einem Durchflußaufnehmer, einer Betriebs-Elektronik und einer Auswerte-Elektronik. Im Folgenden wird, falls nötig, der Einfachheit halber nur von Durchflußmessern bzw. Durchflußaufnehmern gesprochen.

Mit magnetisch-induktiven Durchflußmessern läßt sich bekanntlich der Volumendurchfluß einer elektrisch leitenden Flüssigkeit messen, die in einer Rohrleitung fließt; es wird also per definitionem das pro Zeiteinheit durch einen Rohrquerschnitt fließende Volumen der Flüssigkeit gemessen.

Der Durchflußmesser hat ein Meßrohr, das in die Rohrleitung flüssigkeitsdicht, z.B. mittels Flanschen oder Verschraubungen, eingesetzt wird. Der die Flüssigkeit berührende Teil des Meßrohrs ist i.a. elektrisch nicht-leitend, damit eine Spannung nicht kurzgeschlossen wird, die nach dem Faraday'schen Induktionsgesetz von einem das Meßrohr durchsetzenden Magnetfeld in der Flüssigkeit induziert wird.

Metall-Meßrohre sind daher üblicherweise innen mit einer elektrisch nicht-leitenden Schicht, z.B. aus Hartgummi, Polyfluorethylen etc., versehen und auch i.a. nichtferromagnetisch; bei vollständig aus einem Kunststoff oder aus einer Keramik, insb. aus Aluminiumoxid-Keramik, bestehenden Meßrohren ist die elektrisch nicht-leitende Schicht demgegenüber nicht erforderlich.

Das Magnetfeld wird mittels zweier Spulenanordnungen erzeugt, von denen jede auf einem gedachten Durchmesser des Meßrohrs von außen an diesem angeordnet ist. Jede Spulenanordnung besteht üblicherweise aus einer Spule ohne Kern oder einer Spule mit einem weichmagnetischen Kern.

Damit das von den Spulen erzeugte Magnetfeld möglichst homogen ist, sind sie im häufigsten und einfachsten Fall identisch zueinander und elektrisch gleichsinnig in Serie geschaltet, sodass sie im Betrieb vom selben Spulenstrom durchflossen werden können. Es ist jedoch auch schon beschrieben worden, die Spulen abwechselnd gleich- bzw. gegensinnig vom selben Spulenstrom durchfließen zu lassen, vgl. die US-A 56 46 353, um dadurch die Viskosität nichtnewton'scher Flüssigkeiten messen zu können.

Der eben erwähnte Spulenstrom wird von einer Betriebs-Elektronik erzeugt; er wird auf einen konstanten Stromwert von z.B. 85 mA geregelt, und seine Stromrichtung wird periodisch umgekehrt; dies verhindert, dass sich an den Elektroden elektrochemische Störspannungen aufbauen. Die Stromrichtungsumkehr wird dadurch erreicht, dass die Spulen in einer sogenannten T-Schaltung oder einer sogenannten H-Schaltung liegen; zur Stromregelung und -richtungsumkehr vgl. die US-A 44 10 926 oder die US-A 60 31 740.

Die erwähnte induzierte Spannung wird mittels mindestens zwei galvanischen, also von der Flüssigkeit benetzten, oder mittels mindestens zwei kapazitiven, also z.B. innerhalb der Wand des Meßrohrs angeordneten, Elektroden abgegriffen, die im häufigsten Fall diametral einander gegenüberliegend so angeordnet sind, dass ihr gemeinsamer Durchmesser senkrecht zur Richtung des Magnetfelds und somit senkrecht zum Durchmesser ist, auf dem die Spulenanordnungen liegen. Die induzierte Spannung wird mittels einer Auswerte-Elektronik zu einem Volumendurchflußsignal aufbereitet, das registriert, angezeigt oder seinerseits weiterverarbeitet wird.

Magnetisch-induktive Durchflußmesser messen den Volumendurchfluß mit optimaler Genauigkeit, die derzeit bei ca. 0,2% liegt, wenn die Strömung im Meßrohr gleichmäßig turbulent ist. Unter dieser Bedingung gleichmäßiger Turbulenz wird jeder Durchflußmesser vom Hersteller kalibriert, und es werden die dabei ermittelten Werte des sogenannten Kalibrierfaktors und der Nullpunktabweichung im Durchflußmesser elektronisch gespeichert.

Damit der Durchflußmesser auch nach dessen Verkauf am endgültigen Einsatzort mit dieser Genauigkeit betrieben werden kann, wird vom Hersteller meist eine sogenannte Einlaufstrecke vorgeschrieben, die ein gerades Rohrstück ist und zwischen dem Durchflußmesser und einer Rohrleitungsstelle vorhanden sein muss oder einzufügen ist, die die gleichmäßige Turbulenz stört bzw. stören kann. Solche Rohrleitungsstellen können z.B. Rohrkrümmer oder Ventile etc. sein.

Nun kann aber während des Betriebs des Durchflußmessers das so erzeugte gleichmäßig turbulente Strömungsprofil trotz der Einlaufstrecke aufgrund nicht vorhersehbarer Ereignisse oder Veränderungen der Flüssigkeit ungleichmäßig werden. Dies macht die aktuellen Meßergenisse inhärent ungenauer, ja sogar im Worstcase inhärent falsch, ohne dass dies bemerkt werden kann.

Es ist daher wünschenswert und eine Aufgabe der Erfindung, solche die Genauigkeit verschlechternden Ereignisse während der laufenden Messung feststellen, also ein entsprechendes Fehlersignal abzuleiten, das dann z.B. zur Anzeige gebracht wird, einen Alarm auslöst oder der Korrektur des Meßergebnisses dient etc.

Zur Lösung dieser Aufgabe besteht die Erfindung in einem Verfahren zum Betrieb eines magnetisch-induktiven Durchflußmessers, mit dem der Volumendurchfluß einer elektrisch leitenden und strömenden Flüssigkeit zu messen ist, mit einem Durchflußaufnehmer, der umfasst:
- ein Meßrohr für die strömende Flüssigkeit,
   -- von dem ein die Flüssigkeit berührendes Innenteil elektrisch nicht-leitend ist und
   -- das eine Rohrwand aufweist,
- eine am oder im Meßrohr angeordnete erste Elektrode,
- eine am oder im Meßrohr angeordnete zweite Elektrode,
   -- welche Elektroden auf einem ersten Durchmesser des Meßrohrs liegen,
- eine am Meßrohr angeordnete erste Spulenanordnung mit einer ersten Spule (12),
- eine am Meßrohr angeordnete zweite Spulenanordnung mit einer zweiten Spule (13),
   -- welche Spulen den gleichen Wickelsinn haben,
- welche Spulenanordnungen
   -- auf einem zum ersten Durchmesser senkrechten zweiten Durchmesser des Meßrohrs (11) liegen und
   -- der Erzeugung eines die Rohrwand und die Flüssigkeit durchsetzenden Magnetfelds (H) dienen, wenn in der ersten Spule ein erster Spulenstrom und in der zweiten Spule ein zweiter Spulenstrom fließt,
- wobei während einer jeden Periodendauer der Spulenströme diese periodisch ihre Amplitude und Stromrichtung derart ändern, dass
   -- während einer ersten Viertel-Periodendauer
      --- die Spulenströme einander gleich sind,
      --- einen Konstantwert haben und
      --- die Spulen gleichsinnig in einer ersten Stromrichtung durchfließen,
   -- während einer zweiten Viertel-Periodendauer
      --- der erste Spulenstrom den Konstantwert hat und
      --- die erste Spule in einer Gegenrichtung zur ersten Stromrichtung durchfließt,
      --- der zweite Spulenstrom um einen konstanten Betrag kleiner als der Konstantwert ist
      --- und die zweite Spule in der ersten Stromrichtung durchfließt,
   -- während einer dritten Viertel-Periodendauer
      --- die Spulenströme den Konstantwert haben und
      --- die Spulen in der Gegenrichtung durchfließen sowie
   -- während einer vierten Viertel-Periodendauer der erste Spulenstrom den Konstantwert hat und
      --- die erste Spule in der ersten Stromrichtung durchfließt,
      --- der zweite Spulenstrom um den konstanten Betrag kleiner als der Konstantwert ist sowie
      --- die zweite Spule in der Gegenrichtung durchfließt, und
- wobei
   -- während der ersten bzw. zweiten bzw. dritten bzw. vierten Viertel-Periodendauer eine erste bzw. zweite bzw. dritte bzw. vierte Spannung der beiden Potentiale gebildet wird,
   -- aus der ersten und der dritten Spannung eine erste Spannungsdifferenz gebildet wird, die der Berechnung eines Volumen-Durchflußsignals dient,
   -- aus der zweiten und der vierten Spannung eine zweite Spannungsdifferenz gebildet wird,
   -- aus der zweiten Spannungsdifferenz und der ersten Spannungsdifferenz ein Quotient gebildet wird,
   -- der Quotient während eines Kalibrationsschritts des magnetisch-induktiven Durchflußmessers bei gleichmäßig turbulenter Strömung ermittelt und als eine Gerätekonstante im Durchflußmesser gespeichert wird,
   -- während des Betriebs laufend Momemtanwerte des Quotienten gebildet werden, die mit der Gerätekonstante verglichen werden, und
   -- bei Überschreiten eines vorgebbaren Schwellwerts ein Alarm ausgelöst und/oder das Volumen-Durchflußsignal korrigiert wird.

Ein Vorteil der Erfindung besteht darin, dass während der Messungen, insb. spontan, auftretende, nicht vorhersehbare und auch nicht feststellbare Strömungsprofil-Instabilitäten und -Änderungen laufend erkannt, angezeigt und/oder korrigiert werden können.

Das Verfahren der Erfindung und weitere Vorteile werden nun anhand von in den Figuren der Zeichnung dargestellten Zeitdiagrammen und schematisierten Schaltbildern eines magnetisch-induktiven Durchflußmessers näher erläutert.
- Fig. 1: zeigt schematisch und teilweise in der Form eines Blockschaltbilds einen für den Ablauf des Verfahrens der Erfindung geeigneten magnetisch-induktiven Durchflußmesser, und
- Fig. 2: zeigt Zeitdiagramme der periodisch in den Spulen fließenden Spulenströme.

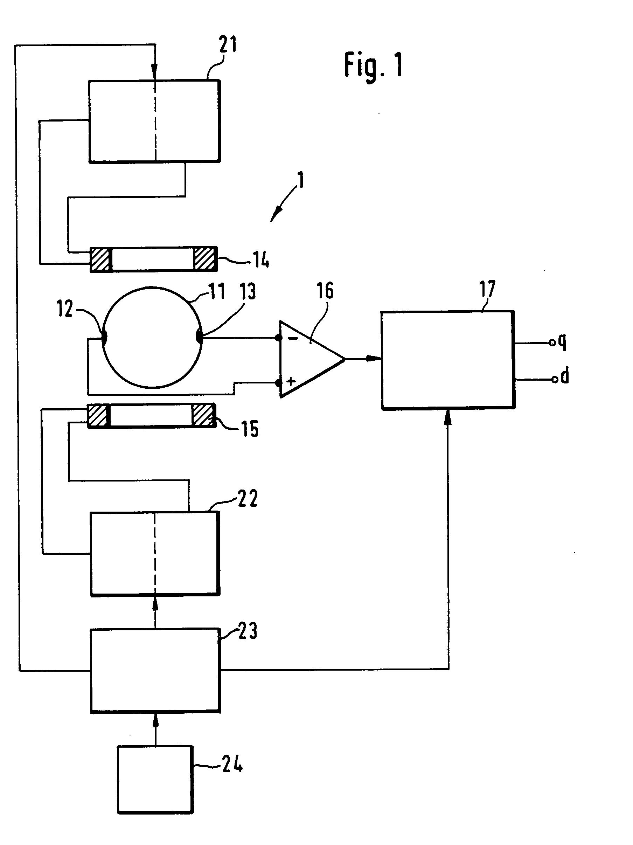

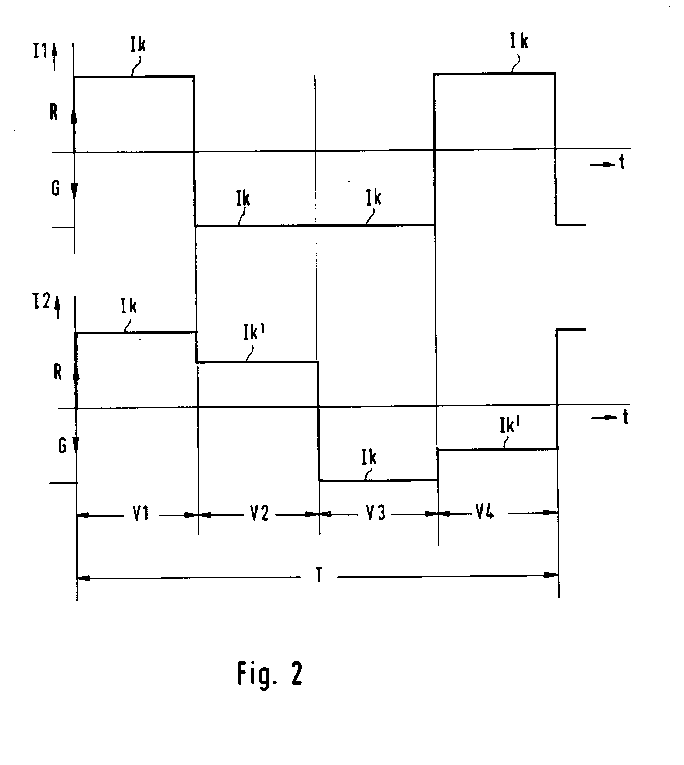

In Fig. 1 ist schematisch und teilweise in der Form eines Blockschaltbilds ein für den Ablauf des Verfahrens der Erfindung geeigneter magnetisch-induktiver Durchflußmesser, mit dem der Volumendurchfluß einer elektrisch leitenden und strömenden Flüssigkeit zu messen ist, und in Fig. 2 sind Zeitdiagramme von im Betrieb auftretenden Größen dargestellt. Die Fig. 1 und 2 werden nicht nacheinander, sondern zusammen erläutert.

Der Durchflußaufmesser, mit dem das Verfahren der Erfindung ausgeführt werden kann, umfasst einen Durchflußaufnehmer 1 und eine Betriebs- und Auswerte-Elektronik. Zum Durchflußaufnehmer 1 gehört ein Meßrohr 11, das eine Rohrwand aufweist und durch das im Betrieb die zu messende, Elektrode leitende Flüssigkeit strömt. Ein die Flüssigkeit berührendes Innenteil des Meßrohrs 11 ist elektrisch nicht-leitend, damit, wenn dies nicht so wäre, die von dem erwähnten Magnetfeld induzierte Spannung nicht kurzgeschlossen wird.

Metall-Meßrohre sind daher üblicherweise innen mit einer elektrisch nicht-leitenden Schicht, z.B. aus Hartgummi, Polyfluorethylen etc., versehen und auch i.a. nichtferromagnetisch; bei vollständig aus einem Kunststoff oder aus einer Keramik, insb. aus Aluminiumoxid-Keramik, bestehenden Meßrohren ist die elektrisch nichtleitende Schicht demgegenüber nicht erforderlich.

Eine an einer Innenseite der Rohrwand des Meßrohrs 11 angeordnete Elektrode 12 dient dem Abgriff eines von einem Magnetfeld induzierten ersten Potentials. Eine in der gleichen Weise angeordnete zweite Elektrode 13 dient dem Abgriff eines vom Magnetfeld induzierten zweiten Potentials (zur Erzeugung des Magnetfelds s.u). Die Elektroden 12, 13 liegen auf einem ersten Durchmesser des Meßrohrs 11.

In Fig. 1 sind die Elektroden 12, 13 galvanische Elektroden, die also die Flüssigkeit berühren. Es können jedoch auch zwei kapazitive, also z.B. innerhalb der Rohrwand des Meßrohrs 11 angeordnete, Elektroden verwendet werden. Jede Elektrode greift für sich ein elektrisches Potential ab, das im Betrieb aufgrund des Faraday-Gesetzes in der Flüssigkeit induziert wird.

Eine am Meßrohr 11 angeordnete erste Spulenanordnung weist eine erste Spule 14 und eine am Meßrohr 11 angeordnete zweite Spulenanordnung eine zweite Spule 15 auf. Die Spulen haben den gleichen Wickelsinn und liegen auf einem zum ersten Durchmesser senkrechten zweiten Durchmesser des Meßrohrs 11.

Die Spulenanordnungen dienen im Betrieb der Erzeugung eines die Rohrwand und die Flüssigkeit durchsetzenden Magnetfelds. Dieses entsteht, wenn in der Spule 14 ein erster Spulenstrom I1 und in der Spule 15 ein zweiter Spulenstrom I2 fließt.

In Fig. 1 ist vorausgesetzt, dass die Spulenanordnungen keinen Kern enthalten, also sogenannte Luftspulen sind. Meist sind die Spulen jedoch um einen Kern gewickelt, der i.a. weichmagnetisch ist, wobei die Kerne mit Polschuhen zusammenwirken können, vgl. z.B. die US-A 55 40 103.

Bei der Erfindung sind die Spulenströme I1, I2 Gleichströme mit dem in Fig. 2 dargestellten zeitlichen Verlauf, und zwar ändern sie während einer Periodendauer T periodisch ihren Stromwert und ihre Stromrichtung wie folgt.

Während einer ersten Viertel-Periodendauer V1 sind die Spulenströme I1, I2 einander gleich und haben einen Konstantwert Ik. Die Spulenströme I1, I2 durchfließen die Spulen 12, 13 gleichsinnig in einer ersten Stromrichtung R, sodass sie ein homogenes Magnetfeld erzeugen.

Während einer zweiten Viertel-Periodendauer V2 hat der Spulenstrom I1 den Konstantwert Ik und durchfließt die Spule 12 in einer Gegenrichtung G zur ersten Stromrichtung. Der Spulenstrom I2 ist um einen konstanten Betrag kleiner als der Konstantwert Ik, sodass er den Stromwert Ik' hat, und durchfließt die Spule 13 in der Stromrichtung R. Das Magnetfeld ist nun nicht mehr homogen, sondern verzerrt.

Während einer dritten Viertel-Periodendauer V3 sind die Spulenströme I1, I2 wieder einander gleich und haben den Konstantwert Ik. Die Spulenströme I1, I2 durchfließen die Spulen 12, 13 gleichsinnig in der Gegenrichtung G, sodass sie wieder ein homogenes Magnetfeld erzeugen, das nun aber seine Richtung gegenüber der Richtung in der Viertel-Periodendauer V1 umgekehrt hat.

Schließlich hat während einer vierten Viertel-Periodendauer V4 der Spulenstrom I1 den Konstantwert Ik und durchfließt die Spule 12 in der Stromrichtung R. Der Spulenstrom I2 ist wieder um den konstanten Betrag kleiner als der Konstantwert Ik, sodass er ebenfalls den Stromwert Ik' hat, und durchfließt die Spule 13 in der Gegenrichtung G. Das Magnetfeld ist nun wieder verzerrt, jedoch im Vergleich zur Verzerrung in der Viertel-Periodendauer V2 in Gegenrichtung zu der Richtung der dortigen Verzerrung.

In Fig. 2 ist durch die Darstellung der Stromrichtung R als positive Ordinate und der Gegenrichtung G als negativer Ordinate bedingt, dass der Konstantwert Ik und der Stromwert Ik' teils positiv, teils negativ erscheinen. Da diese Ströme jedoch in miteinander elektrisch nicht verbundenen Spulen fließen, addieren sich die Ströme nicht, sondern erst in der räumlichen Form des Magnetfelds wirkt sich die gleichsinnige bzw. entgegengesetzte Richtung der Spulenströme aus. Während der Viertel-Periodendauern V2, V4 ist diese Wirkung praktisch die gleiche, wie wenn die beiden Spulen in Serie geschaltet wären.

Zur Erzeugung des Spulenstroms I1 ist in Fig. 1 ein erster Spulenstromgenerator und -umpoler 21 vorgesehen, der auf die Konstantwerte Ik, Ik' regelt und die Umschaltungen entsprechend Fig. 2 vornimmt. Ebenso werden der Spulenstrom I2 von einem zweiten Spulenstromgenerator und -umpoler 22 erzeugt, der die Ströme Ik, Ik' wiederum konstant regelt und die Umschaltungen entsprechend Fig. 2 vornimmt; vgl. zur Stromregelung und -umpolung z.B. die US-A 44 10 926 oder die US-A 60 31 740. Das Umpolen wird von einer Ablaufsteuerung 23 bewirkt, die von einem Taktgenarator 24 gesteuert ist und auch mit der Auswerte-Elektronik 17 zusammenarbeitet.

In Fig. 1 sind wie üblich die Elektroden 12, 13 mit einem nicht-invertierenden bzw. einem invertierenden Eingang eines Differenzverstärkers 16 verbunden, der aus den Potentialen an den Elektroden eine Spannung an seinem Ausgang bildet. Da derartige Differenzverstärker meist nur einen von eins nur wenig verschiedenen Verstärkungsfaktor haben, kann für die Zwecke der Erläuterung der Erfindung die Spannung am Ausgang des Differenzverstärker 16 mit der Spannung an dessen Eingängen gleichgesetzt werden.

Für die weitere Erläuterung der Erfindung ist nun wichtig, dass während jeder der vier Viertel-Periodendauern V1, V2, V3, V4 eine andere Spannung gebildet wird, nämlich während der ersten bzw. zweiten bzw. dritten bzw. vierten Viertel-Periodendauer eine erste bzw. zweite bzw. dritte bzw. vierte Spannung U1, U2, U3, U4. Die Bildung der vier Spannungen erfolgt wie üblich durch mindestens einmaliges Abtasten und Halten zu immer dem gleichen Zeitpunkt während der jeweiligen Viertel-Periodendauer.

Aus der ersten und der dritten Spannung wird eine erste Spannungsdifferenz U31 = U3 - U1 gebildet, die in üblicher Weise der Berechnung eines Volumen-Durchflußsignals q mittels einer Auswerte-Elektronik 17 dient. Aus der zweiten und der vierten Spannung wird eine zweite Spannungsdifferenz U42 = U4 - U2 gebildet, die durch die erste Spannungsdifferenz dividiert wird, sodass ein Quotient Q = U24/U31 entsteht.

Während eines Kalibrationsschritts des magnetisch-induktiven Durchflußmessers wird bei gleichmäßig turbulenter Strömung der Quotient Q ermittelt und als eine Gerätekonstante Qk in der Auswerte-Elektronik 17 des Durchflußmessers gespeichert.

Während des Betriebs des Durchflußmessers werden laufend Momemtanwerte Qm des Quotienten Q gebildet, die mit der Gerätekonstante Qk verglichen werden. Bei Überschreiten eines vorgebbaren Schwellwerts wird dies durch ein Signal d angezeigt und/oder es wird ein Alarm ausgelöst und/oder es wird das Volumen-Durchflußsignal korrigiert.

Es liegt im Rahmen der Erfindung, die eben erwähnten Differenz- und Quotienbildungen mindestens teilweise durch einen entsprechend programmierten Mikroprozessor zu realisieren, der dann Bestandteil der Auswerte-Elektronik 17 ist und dem ein Analog/Digital-Wandler vorgeschaltet ist, vgl. z.B. die US-A 59 07 103.

## Patentansprüche

1. Verfahren zum Betrieb eines magnetisch-induktiven Durchflußmessers, mit dem der Volumendurchfluß einer elektrisch leitenden und strömenden Flüssigkeit zu messen ist, mit einem Durchflußaufnehmer (1), der umfasst:
- ein Meßrohr (11) für die strömende Flüssigkeit,
-- von dem ein die Flüssigkeit berührendes Innenteil elektrisch nicht-leitend ist und
-- das eine Rohrwand aufweist,
- eine am oder im Meßrohr angeordnete erste Elektrode (12),
- eine am oder im Meßrohr angeordnete zweite Elektrode (13),
-- welche Elektroden auf einem ersten Durchmesser des Meßrohrs liegen,
- eine am Meßrohr angeordnete erste Spulenanordnung mit einer ersten Spule (14),
- eine am Meßrohr angeordnete zweite Spulenanordnung mit einer zweiten Spule (15),
-- welche Spulen den gleichen Wickelsinn haben,
- welche Spulenanordnungen
-- auf einem zum ersten Durchmesser senkrechten zweiten Durchmesser des Meßrohrs (I1) liegen und
-- der Erzeugung eines die Rohrwand und die Flüssigkeit durchsetzenden Magnetfelds dienen, wenn in der ersten Spule ein erster Spulenstrom (I1) und in der zweiten Spule ein zweiter Spulenstrom (I2) fließt,
- wobei während einer Periodendauer (T) der Spulenströme (I1, I2) diese periodisch ihre Amplitude und Stromrichtung derart ändern, dass
-- während einer ersten Viertel-Periodendauer (V1)
--- die Spulenströme (I1, I2) einander gleich sind,
--- einen Konstantwert (Ik) haben und
--- die Spulen (14, 15) gleichsinnig in einer ersten Stromrichtung (R) durchfließen,
-- während einer zweiten Viertel-Periodendauer (V2)
--- der erste Spulenstrom (I1) den Konstantwert (Ik) hat und
--- die erste Spule (14) in einer Gegenrichtung (G) zur ersten Stromrichtung (R) durchfließt,
--- der zweite Spulenstrom (I2) um einen konstanten Betrag kleiner als der Konstantwert (Ik) ist,
--- und die zweite Spule (15) in der ersten Stromrichtung (R) durchfließt,
-- während einer dritten Viertel-Periodendauer (V3)
--- die Spulenströme (I1, I2) den Konstantwert (Ik) haben und
--- die Spulen (14, 15) in der Gegenrichtung (G) durchfließen sowie
--- während einer vierten Viertel-Periodendauer (V4)
--- der erste Spulenstrom (I1) den Konstantwert (Ik) hat und
--- die erste Spule (I4) in der ersten Stromrichtung (R) durchfließt,
--- der zweite Spulenstrom (I2) um den konstanten Betrag kleiner als der Konstantwert (Ik) ist und
--- die zweite Spule (I5) in der Gegenrichtung (G) durchfließt, und
- wobei
-- während der ersten bzw. zweiten bzw. dritten bzw. vierten Viertel-Periodendauer eine ersten bzw. zweite bzw. dritte bzw. vierte Spannung der beiden Potentiale gebildet wird,
-- aus der ersten und der dritten Spannung eine erste Spannungsdifferenz gebildet wird, die der Berechnung eines Volumen-Durchflußsignals dient,
-- aus der zweiten und der vierten Spannung eine zweite Spannungsdifferenz gebildet wird,
-- aus der zweiten Spannungsdifferenz und der ersten Spannungsdifferenz ein Quotient gebildet wird,
-- der Quotient während eines Kalibrationsschritts des magnetisch-induktiven Durchflußmessers bei gleichmäßig turbulenter Strömung ermittelt und als eine Gerätekonstante im Durchflußmesser gespeichert wird,
-- während des Betriebs laufend Momemtanwerte des Quotienten gebildet werden, die mit der Gerätekonstante verglichen werden, und
-- bei Überschreiten eines vorgebbaren Schwellwerts ein Alarm ausgelöst oder das Volumen-Durchflußsignal korrigiert wird.
